# EUROPEAN PATENT SPECIFICATION

(11) **EP 0 792 772 B1**
(45) Date of publication and mention of the grant of the patent: **03.05.2000**
(21) Application number: 97200291.9
(22) Date of filing: 03.02.1997
(51) Int. Cl.: B60R 11/00, F16P 5/00

(54) **Fluid reservoir protection sleeve**
Schutzhülse für einen Behälter
Manchon de protection pour réservoir de fluide

(30) Priority: 01.03.1996 GB 9604497
(43) Date of publication of application: 03.09.1997
(73) Proprietor: Delphi France Automotive Systems, 92257 La Garenne-Colombes (FR)
(72) Inventor: Kachel, Jean Claude, 92210 St Cloud (FR); Biecher, Emile, 93200 St Denis (FR); Luck, Laurent, 77129 Monthyon (FR)
(74) Representative: Denton, Michael John

(56) References cited:
- DE-U- 8 908 319
- FR-A- 2 101 483
- GB-A- 2 208 283
- GB-A- 2 261 639
- US-A- 5 333 752
- PATENT ABSTRACTS OF JAPAN vol. 008, no. 177 (M-317), 15 August 1984 & JP 59 070231 A (TOYOTA JIDOSHA KK), 20 April 1984,

## Description

The present invention relates to a protection sleeve for a fluid reservoir in a motor vehicle, and an assembly of the protection sleeve and the fluid reservoir.

Located within a motor vehicle can be one or more fluid reservoirs, for example, a steering pump fluid reservoir or a hydraulic brake fluid reservoir. During certain exceptional circumstances, for example, a vehicle collision, it has been known for a fluid reservoir to crack and leak fluid.

It is an object of the present invention to provide additional protection for the fluid reservoir.

A protection sleeve for a fluid reservoir in accordance with the present invention comprises a body portion having an internal surface which has a shape and size substantially the same as the shape and size of the exposed external surface of the fluid reservoir; and a lip portion at an edge of the body portion which is lowermost when positioned on the fluid reservoir; wherein the body portion and the lip portion are integrally moulded in one piece from an elastomeric material which is substantially resistant to any fluid in the fluid reservoir, substantially resistant to temperature degradation up to a predetermined temperature, and has a predetermined minimum thickness such that the protection sleeve is substantially resistant to shear forces.

The present invention also includes an assembly of the protection sleeve as herein defined and a fluid reservoir, wherein the protection sleeve is secured to the fluid reservoir to substantially cover the exposed external surface of the fluid reservoir, and to define a fluid path between the internal surface of the protection sleeve and the covered external surface of the fluid reservoir, the fluid path being open to the environment only at the lip portion of the protection sleeve.

The present invention provides a protection sleeve which can make a close fit over the exposed surfaces of a fluid reservoir, which is resistant to shear and the fluid in the reservoir, which defines a drainage path for any fluid which may escape from the reservoir, and which is temperature resistant to a predetermined temperature.

The present invention will now be described, by way of example, with reference to the accompanying drawings, in which:-
Figure 1 is a perspective view of a power steering pump and its fluid reservoir for a motor vehicle;
Figure 2 is a perspective view of a protection sleeve in accordance with the present invention for the fluid reservoir shown in Figure 1; and
Figure 3 is a cross-sectional view on the line III-III of Figure 2.

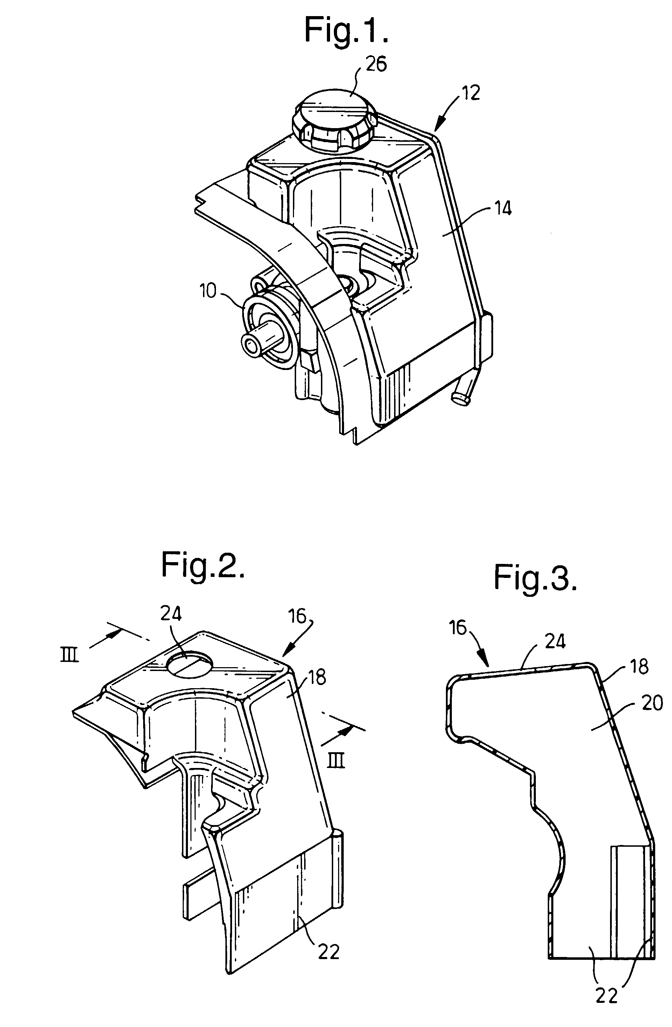

Referring to Figure 1 of the drawings, a power steering pump 10 is shown with a fluid reservoir 12 attached thereto. The fluid reservoir 12 stores fluid for pumping by the power steering pump 10. The fluid reservoir has an external surface 14 which is normally exposed to the environment.

Referring to Figures 2 and 3 of the drawings, a protection sleeve 16 is shown. The protection sleeve 16 comprises a body portion 18 which has an internal surface 20 which has a shape and size which is substantially the same as the shape and size of the external surface 14 of the fluid reservoir 12, and a lip portion 22 at an edge of the body portion 18 which is lowermost when the protection sleeve 16 is positioned on the fluid reservoir 12. The body portion 18 and the lip portion 22 of the protection sleeve 16 are integrally moulded in one piece from an elastomeric material which is substantially resistant to any fluid in the fluid reservoir, substantially resistant to temperature degradation up to a predetermined temperature, and has a predetermined minimum thickness such that the protection sleeve is substantially resistant to shear forces. The elastomeric material is preferably NBR (nitrile butadiene rubber) or HNBR (hydrogenated nitrile butadiene rubber). The predetermined minimum thickness is preferably about 2.5 mm. The predetermined temperature is preferably 150°C.

The protection sleeve 16 is positioned on the fluid reservoir 12 to substantially cover the exposed external surface 14 of the fluid reservoir, and is preferably secured thereto by spot welding around the edges of the protection sleeve or any other suitable means. This arrangement leaves a small gap between the inner surface 20 of the protection sleeve 16 and the covered external surface 14 of the fluid reservoir 12. The gap defines a fluid path between the inner surface 20 of the protective sleeve 16 and the covered external surface 14 of the fluid reservoir 12 which only opens to the environment at the lip portion 22 of the protection sleeve.

The protection sleeve 16 has an aperture 24 which surrounds the filling aperture in the fluid reservoir 12 such that after securing the protection sleeve on the fluid reservoir the filler cap 26 of the fluid reservoir is still accessible.

With the present invention, in the event of an exceptional circumstance which cracks the fluid reservoir 12, any leaking fluid is directed by the fluid path defined between the protection sleeve 16 and the fluid reservoir to the lip portion 22 of the protection sleeve. With this arrangement, any leaking fluid can be directed away from any hot components in the motor vehicle. The present invention can be used with any fluid reservoir in a motor vehicle, including a brake fluid reservoir or clutch fluid reservoir. The present invention has the additional benefit that the protection sleeve can be moulded to cover any current design of fluid reservoir. That is, no design changes are required to fluid reservoirs currently in production, and the positioning of such fluid reservoirs within the motor vehicle need not be changed.

The protection sleeve 16 is preferably secured to the fluid reservoir 12 is such a manner that the protection sleeve cannot be removed without permanently damaging the protection sleeve and/or the fluid reservoir. This arrangement will ensure that in the event of damage to either the protection sleeve or the fluid reservoir, the whole assembly will have to be replaced to ensure that a fluid reservoir is refitted with protection sleeve in place.

## Claims

1. A protection sleeve (16) for a fluid reservoir (12) comprising a body portion (18) having an internal surface (20) which has a shape and size substantially the same as the shape and size of the exposed external surface (14) of the fluid reservoir; and a lip portion (22) at an edge of the body portion which is lowermost when positioned on the fluid reservoir; wherein the body portion and the lip portion are integrally moulded in one piece from an elastomeric material which is substantially resistant to any fluid in the fluid reservoir, substantially resistant to temperature degradation up to a predetermined temperature, and has a predetermined minimum thickness such that the protection sleeve is substantially resistant to shear forces.

2. A protection sleeve as claimed in Claim 1, wherein the elastomeric material is NBR (nitrile butadiene rubber) or HNBR (hydrogenated nitrile butadiene rubber).

3. A protection sleeve as claimed in Claim 1 or Claim 2, wherein the predetermined minimum thickness is about 2.5 mm.

4. A protection sleeve as claimed in any one of Claims 1 to 3, wherein the predetermined temperature is 150°C.

5. An assembly of a protection sleeve (16) as claimed in any one of Claims 1 to 4 and a fluid reservoir (12), wherein the protection sleeve is secured to the fluid reservoir to substantially cover the exposed external surface (14) of the fluid reservoir, and to define a fluid path between the internal surface (20) of the protection sleeve and the covered external surface of the fluid reservoir, the fluid path being open to the environment only at the lip portion (22) of the protection sleeve.

6. An assembly as claimed in Claim 5, wherein the protection sleeve (16) is secured to the fluid reservoir (12) by spot welding.

## Patentansprüche

1. Schutzhülse (16) für einen Flüssigkeitsbehälter (12) mit einem Körperabschnitt (18), der eine Innenfläche (20) mit einer Form und Größe aufweist, die im wesentlichen gleich wie die Form und Größe der freiliegenden Außenfläche (14) des Flüssigkeitsbehälters ist, und einem Lippenabschnitt (22) an einem Rand des Körperabschnitts, der am tiefsten liegt, wenn er auf dem Flüssigkeitsbehälter angeordnet ist, wobei der Körperabschnitt und der Lippenabschnitt integral in einem Stück aus einem elastomeren Material geformt sind, das im wesentlichen gegenüber jeder Flüssigkeit in dem Flüssigkeitsbehälter beständig ist, im wesentlichen bis zu einer vorherbestimmten Temperatur gegenüber einem temperaturbedingten Qualitätsverlust beständig ist und eine vorherbestimmte minimale Dicke aufweist, so daß die Schutzhülse im wesentlichen gegenüber Scherkräften beständig ist.

2. Schutzhülse nach Anspruch 1, wobei das elastomere Material NBR (Nitrilkautschuk) oder HNBR (hydrierter Nitrilkautschuk) ist.

3. Schutzhülse nach Anspruch 1 oder Anspruch 2, wobei die vorherbestimmte minimale Dicke ungefähr 2,5 mm beträgt.

4. Schutzhülse nach einem der Ansprüche 1 bis 3, wobei die vorherbestimmte Temperatur 150 °C beträgt.

5. Aufbau aus einer Schutzhülse (16) nach einem der Ansprüche 1 bis 4 und einem Flüssigkeitsbehälter (12), wobei die Schutzhülse an dem Flüssigkeitsbehälter derart befestigt ist, daß die freiliegende Außenfläche (14) des Flüssigkeitsbehälters im wesentlichen bedeckt ist, und daß ein Flüssigkeitsweg zwischen der Innenfläche (20) der Schutzhülse und der bedeckten Außenfläche des Flüssigkeitsbehälters definiert ist, wobei der Flüssigkeitsweg zur Umgebung hin nur an dem Lippenabschnitt (22) der Schutzhülse offen ist.

6. Aufbau nach Anspruch 5, wobei die Schutzhülse (16) durch Punktschweißen an dem Flüssigkeitsbehälter (12) befestigt ist.

## Revendications

1. Carter de protection (16) destiné à un réservoir de fluide (12) comportant une partie de corps (18) comprenant une surface interne (20) qui présente une forme et une taille sensiblement identiques à la forme et à la taille de la surface externe apparente (14) du réservoir de fluide ; et une partie de rebord (22) sur un bord de la partie de corps qui est le plus bas lorsqu'il est positionné sur le réservoir de fluide ; dans lequel la partie de corps et la partie de rebord sont moulées intégralement en une pièce, en un matériau élastomère qui est relativement résistant à tout fluide présent dans le réservoir, relativement résistant à la dégradation en température jusqu'à une température prédéterminée et qui présente une épaisseur minimum prédéterminée de telle manière que le carter de protection est relativement résistant aux efforts de cisaillement.

2. Carter de protection selon la revendication 1, dans lequel le matériau élastomère est du NBR (caoutchouc nitrile butadiène) ou du HNBR (caoutchouc nitrile butadiène hydrogéné).

3. Carter de protection selon la revendication 1 ou 2, dans lequel l'épaisseur minimum prédéterminée est de 2,5 mm environ.

4. Carter de protection selon l'une quelconque des revendications 1 à 3, dans lequel la température prédéterminée est de 150°C.

5. Ensemble comprenant un carter de protection (16) selon l'une quelconque des revendications 1 à 4 et un réservoir de fluide (12), dans lequel le carter de protection est fixé sur le réservoir de fluide afin de recouvrir sensiblement la surface externe apparente (14) du réservoir de fluide, et de définir un circuit de fluide entre la surface interne (20) du carter de protection et la surface externe recouverte du réservoir de fluide, le circuit de fluide débouchant dans l'environnement seulement au niveau de la partie de rebord (22) du carter de protection.

6. Ensemble selon la revendication 5, dans lequel le carter de protection (16) est fixé sur le réservoir de fluide (12) par soudage par point.
